(19) Europäisches Patentamt
European Patent Office
Office européen des brevets

(11) **EP 3 915 810 B1**

(12) **EUROPEAN PATENT SPECIFICATION**

(45) Date of publication and mention
of the grant of the patent:
**22.11.2023   Bulletin 2023/47**

(21) Application number: **20465530.2**

(22) Date of filing: **29.05.2020**

(51) International Patent Classification (IPC):
***B60C 11/24*** *(2006.01)*

(52) Cooperative Patent Classification (CPC):
**B60C 11/243; B60C 11/246**

(54) **SYSTEM AND METHOD FOR MEASURING TREAD DEPTH OF A PNEUMATIC TYRE**

SYSTEM UND VERFAHREN ZUR MESSUNG DER PROFILTIEFE EINES LUFTREIFENS

SYSTÈME ET PROCÉDÉ DE MESURE DE PROFONDEUR DE BANDE DE ROULEMENT D'UN PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.12.2021   Bulletin 2021/48**

(73) Proprietor: **Continental Automotive Technologies
GmbH
30165 Hannover (DE)**

(72) Inventor: **Cimponeriu, Andrei-Stefan
81737 München (DE)**

(74) Representative: **Continental Corporation
c/o Continental Automotive GmbH
Intellectual Property
Postfach 83 01 16
81701 München (DE)**

(56) References cited:
**EP-A1- 3 572 246          EP-A1- 3 632 667
WO-A1-2015/083072     DE-A1-102007 053 153
JP-A- 2019 064 433        US-A1- 2009 078 347**

**Description**

The present invention relates to a system and a method for measuring tread depth of a pneumatic tyre

Vehicle tyres, which are most commonly air or gas-filled pneumatic tyres, provide static fiction or frictional grip between the tyre and the surface. Pneumatic tyres have a profile including a pattern of grooves in the surface having a depth, commonly referred to a tread depth. Road traffic regulations commonly stipulate a minimum tread depth for the tyres. Furthermore, monitoring tread depth enables vehicle fleet owners/managers to be able to schedule tyre replacements beforehand and brings economic advantages.

The tread depth may be measured when the vehicle is not moving, for example, by mechanically measuring the depth of the grooves. The depth of a tread profile may, however, be measured continuously also whilst the vehicle is in operation and even moving. WO 2015/083072 A1 discloses a sensor device which includes a sensing element embedded in the vehicle tyre, which has a free surface that is part of the rolling surface of the tyre tread, and which includes a ferromagnetic material and a coil having an inductance and comprising two protruding terminals. The sensor device further includes an electronic circuit installed on an inner surface of the tyre and electrically connected to the terminals, wherein the electronic circuit is configured to measure the impedance of the coil and to generate an output signal representative of the measured impedance. The electronic circuit further comprises a transponder with a wireless transmitter configured to transmit said output signal. The coil terminals are led through the tyre inner liner and steel layers and are subject to bending, making questionable air tightness and rubber endurance.

Further improvements to systems and methods for measuring tread depth are desirable, in particular, systems avoiding materials protruding through the tyre inner liner.

According to the invention, a system for measuring tread depth of a pneumatic tyre is provided. The system comprises a sensor element including a magnetic inlay that is sized and shaped to be embedded in the tyre whose tread depth is to be measured. The magnetic inlay is also sized and shaped to have an outer surface that is part of a rolling surface of the tyre. The sensor also comprises a first coil having a first inductance and a second coil having a second inductance. The first inductance is different from the second inductance and the first inductance and the second inductance are dependent at least in part on the size of the magnetic inlay. Wear of the magnetic inlay causes a change in the value of the measured first inductance and/or measured second inductance, the change being indicative of wear of the tread depth of the tyre. The system also comprises an inductance measuring circuit for measuring the first inductance of the first coil and the second inductance of the second coil, means to calculate the ratio of the measured first inductance and of the measured second inductance and a transmitter for transmitting one or more output value(s). The output value may be, or be representative of, the measured first inductance and/or the measured second inductance and/or the ratio of the measured first inductance and/or the measured second inductance.

The system may be provided in the form of a kit of parts for assembling the system for monitoring a tread depth of a tyre, for example a pneumatic tyre of a vehicle. The parts of the kit can be assembled in and/or on the tyre of the vehicle.

In operation, the magnetic inlay is embedded in the tyre such that it has an outer surface that is free lying or exposed from the material of the tyre and that forms part of the rolling surface of the tyre. In use, the rolling surface of the tyre is subjected to abrasive wear which results in successive removal of the rolling surface and the outer surface of the magnetic inlay over time and in a reduction in the depth of the grooves and, therefore, the tread depth.

In the system according to the invention, the decrease of the tread depth is inferred from measured changes in the ratio of the first inductance of the first coil and of the second inductance of the second coil, since the measured first and second inductance are dependent on the size of the magnetic inlay and the size of the magnetic inlay is reduced by wear of the magnetic inlay and the surrounding tyre. The inventor has realised that the measured first and second inductance of the first and second coil are also dependent on temperature due to the temperature dependence of the magnetic properties of the magnetic inlay. The influence of the temperature on tread depth measurements is not accounted for in prior art methods. Therefore, according to the invention, the ratio of the first and second inductance is calculated so that the temperature dependence of the magnetic properties of the magnetic inlay on the measured first and second inductance is removed to provide a system for measuring tread depth that has temperature compensation.

The inductances of the first and second coil are influenced by the magnetic properties of the magnetic inlay without a physical connection between the first and second coil and the sensor element. This wireless setup avoids any materials from protruding through the inner liner. Furthermore, since a simple magnetic inlay within a rubber matrix is used, electronic components of the measuring system are not subject to mechanical strain or destruction that inevitably occur in the crown region of the tyre, if non-homogenous structures are used.

In some embodiments, the inductance measuring circuit, the means for calculating the ratio of the first and second inductance and the transmitter are arranged within an electronic module having a housing. The first coil and the second coil may be arranged within the electronic module or be positioned on an outer surface of the housing. The electronic module may be part of a Tyre Parameter Monitoring System (TPMS) such as a tyre pressure monitoring system, for example.

The two coils may have the same or even identical but, due to their position, their inductances are different.

The two coils can be planar coils formed e.g. by a conductive layer of a printed circuit board or on a substrate. In some embodiments, the substrate may be flexible.

In other embodiments the coils may have different geometries. For example, one of the first coil and the second coil may be longer, have a greater number of turns and/or larger diameter.

In some embodiments, the magnetic inlay may have an elongate form, for example a cylindrical or rod shape. The outer surface may be formed by the base of the cylinder or rod shape. The magnetic inlay has a longitudinal axis and the axis of the stack of the first and second planar coils is alignable with the longitudinal axis of the magnetic inlay so that the first planar coil and the second planar coil are arranged symmetrically about the longitudinal axis of the magnetic inlay.

The magnetic inlay comprises ferromagnetic particles embedded in a rubber matrix. The matrix be may formed of a rubber composition that is the same as or similar to the rubber composition of the tyre. The similar or compatible rubber composition may be used so that the magnetic inlay has wear properties that are similar to the wear properties of the tyre so as to increase the accuracy of the tread depth measurement.

In some embodiments, instead of comprising ferromagnetic particles, the inlay can be made of ferrimagnetic particle embedded in a rubber matrix, or of a ferrimagnetic piece like an aluminum alloy spike like in winter tyres.

In some embodiments, the full crown region can comprise ferromagnetic particles and have the role the magnetic inlay.

The ferromagnetic particles may usefully have a Curie temperature which is higher than the maximum temperature to which the pneumatic tyre will be subjected, in particular during the manufacture of the tyre and embedding of the magnetic inlay within the tyre.

In some embodiments, the inductance measuring circuit is an inductance to digital converter module. For example, the inductance to digital converter module LDC1612 which is commercially available from Texas Instruments may be used, as it has an extremely high resolution of 28 bits. The inductance measuring circuit may have a contact or wired connection to the first and second coils.

As mentioned above, the system for measuring tread depth of a pneumatic tyre includes temperature compensation The issues of errors in temperature measurements, non-linearity or an inaccurate value of the temperature coefficient are avoided by the use of two coils having different inductances with a single magnetic inlay that is abraded or worn, since the ratio of the inductances of the two coils, L1/L2, depends on the geometries of the coils and on the core length as well as the magnetic permeability of the core. The magnetic permeability depends on temperature, but this temperature dependence is removed when the ratio of the inductances is considered. Therefore, according to the invention, the pneumatic tyre is provided with a temperature independent or temperature compensated system for monitoring tread depth.

The means for calculating the ratio of the first inductance and the second inductance may be a processor or other circuitry that includes processor executable instructions to calculate the ratio.

The means for calculating the ratio of the first and second inductances may be arranged on the inner surface of the tyre, for example in an electronic module, or on a module arranged on the wheel rim. In this embodiment, the transmitter transmits the calculated ratio to another unit, which may provide a warning signal to the driver or external facility. Alternatively, the means for calculating the ratio of the first and second inductances may be positioned at a distance from the tyre, for example in a unit elsewhere on the vehicle. In this arrangement, the transmitter transmits the measured value of the first inductance and the measured value of the second inductance to the unit.

The output signal can be the ratio of the inductances or the value of the measured first and second inductances and may be transmitted by the transmitter of the system to another unit within the vehicle which may track the tread depth decrease and/or emit a warning signal, for example to the driver or even to unit external to the vehicle, such as a maintenance facility, that the tread depth has decreased, for example to or below a predetermined threshold value.

A single pneumatic tyre may include more than one sensor element for monitoring tread depth at several desired locations. A first and a second coil can be provided for each magnetic inlay. A single inductance measuring circuit and circuitry for processing the measured values of the inductance may be used for all of the sensor elements.

The system may be provided as kit of parts to an external facility which embeds the magnetic inlay of the kit into the pneumatic tyre. The same or a further external facility may then assemble the remaining parts of the kit to provide a system for measuring tread depth of a pneumatic tyre.

Therefore, in some embodiments, the system for measuring tread depth of a pneumatic tyre further comprises a pneumatic tyre having a tread depth and the sensor element, i.e. the magnetic inlay, is embedded in the tyre such that the outer surface of the magnetic inlay forms part of a rolling surface of the tyre.

The first coil and the second coil may be arranged on an inner surface of the tyre. In a preferred embodiment the electronic module is arranged on the inner surface of the tyre, and includes, close to the inner surface of the tire, the first and second coil.

In other embodiments, the coils may be arranged on an outer surface of the electronic module, between the inner surface of the tyre and the outer surface of the electronic module.

In some embodiments, the magnetic inlay has a longitudinal axis and the first coil is a planar coil and the second coil is a planar coil with the first coil and the second coil are arranged in a stack symmetrically about an axis that extends perpendicularly to the plane of the first planar coil and the second planar coil. In the assembled condition, the axis of the stack is aligned with the longitudinal axis of the magnetic inlay so that the first planar coil and the second planar coil are arranged symmetrically about the longitudinal axis of the magnetic inlay. This arrangement may be used to increase the influence of the magnetic inlay on the inductance of the first and second coils and to increase the influence of the reduction in size or height of the magnetic inlay along the longitudinal axis on the measured inductance of the first and second coils, thus increasing the accuracy of the measurement of the change in tread depth.

The invention also provides a method of measuring a tread depth of a pneumatic vehicle tyre. The pneumatic tyre comprises a sensor element in the form of a magnetic inlay embedded in the tyre that has an outer surface that is part of a rolling surface of the tyre. A first coil having a first inductance and a second coil having a second inductance are arranged on an inner surface of the tyre. The first inductance is different from the second inductance and the first inductance and the second inductance are dependent at least in part on the size of magnetic inlay embedded in the tyre. The method comprises measuring a value of the first inductance of the first coil and a value of the second inductance of a second coil, determining a change in the measured value of the first inductance and/or the second inductance, the change arising at least in part from wear of the magnetic inlay and being indicative of wear of the tread depth of the tyre and generating an output signal in response to the determination that there is a change in measured value of the first inductance and/or the second inductance, and transmitting the output signal.

The output signal may include one or more output values that may be, or be representative of, the measured first inductance and/or the measured second inductance and/or a ratio of the measured first inductance and the measured second inductance.

This method may be carried out when the system is assembled on a vehicle such that the tread depth can be measured in-situ, i.e. when the tyre is mounted on the vehicle and also when the vehicle is being operated. The method may also be carried out continuously or repetitively when the tyre is mounted on the vehicle and also when the vehicle is being operated so as to be able to alert the driver that the tread depth has decreased below a predetermined threshold value without the driver having to manually measure the tread depth him or herself.

In some embodiments, the method further comprises determining a ratio of the measured first inductance and the measured second inductance. This embodiment may be used to reduce or remove the influence of temperature on the magnetic properties of the magnetic inlay and therefore the influence of temperature on the measured first and second inductance of the coils. This method may be used to provide temperature compensation for the tread depth measurement.

In some embodiments, the magnetic inlay comprises a longitudinal axis that is substantially perpendicular to the rolling surface, the first coil is a planar coil and the second coil is a planar coil and the first coil and the second coil are arranged in a stack symmetrically about the longitudinal axis of the magnetic inlay. The magnetic inlay comprises a ferromagnetic material having a temperature dependent magnetic permeability. For systems having this arrangement, the method may comprise determining a ratio of the first inductance and the second inductance. This method may be used to provide temperature compensation for the tread depth measurement as the ratio of the first inductance and the second inductance is independent of the temperature dependence of the magnetic permeability.

In some embodiments, a change in the ratio of the measured first inductance and the measured second inductance compared to an initial ratio of the first inductance of the first planar coil and the second inductance of the second planar coil is determined, this change resulting from a reduction in the height of the magnetic inlay along the longitudinal axis is determined, whereby the reduction in the height is caused at least in part by wear of the magnetic inlay and is indicative of a reduction in the tyre tread depth.

In some embodiments, the method further comprises determining if the ratio of the measured first inductance and the measured inductance is indicative of a reduction in the tread depth below a predetermined threshold value, and in response to determining that the ratio is indicative of a reduction in the tread depth below a predetermined threshold value, outputting a warning signal. If it is determined that the ratio of the measured first inductance and the measured inductance is not indicative of a reduction in the tread depth below a predetermined threshold value so that the tread depth has an acceptable value, the method may continue by measuring the first and second inductance again. In some embodiments, the first and second inductance may be measured periodically, for example at predetermined time intervals.

As the inductance of the first and second coil is influenced by the magnetic properties of the magnetic inlay without a physical connection between the first and second coil and the sensor element, the first and second coil and apparatus used to measure the first and second inductance, e.g. an inductance to digital converter module and process the measured values, e.g. a processor, need not be embedded within the tyre. Consequently, the method may be reliably carried out since the apparatus can be positioned outside of the material of the tyre such that it is not subjected to any additional stress associated with an embedding process and such that it is not subjected to stress associated with the operation of the tyre.

Embodiments will now be described with reference to the accompanying drawing.

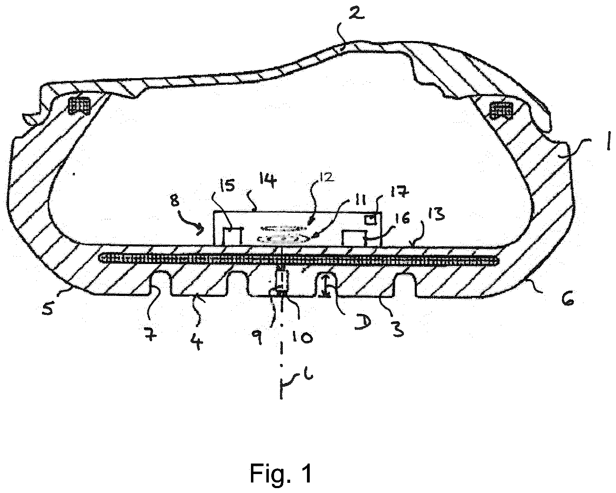

Figure 1 illustrates a cross-sectional view of a pneumatic tyre including a system for monitoring a tread depth of the tyre.

Figure 1 illustrates a cross-sectional view of a pneumatic tyre 1 including a system 8 for monitoring a tread depth of the tyre. The tyre 1 is shown attached to a wheel rim 2. The pneumatic tyre 1 is used for a vehicle that is not illustrated in figure 1. The tyre 1 includes a tyre crown 3 having a rolling surface 4 and tyre shoulders 5, 6 on opposing sides of the crown 3. The rolling surface 4 includes a profile or tread formed by a plurality of grooves 7 which are sized shaped and arranged to provide a suitable static grip between the tyre 1 and the road surface. The grooves 7 have a depth D which is also known as the tread depth.

The system 8 comprises a sensor element in the form of a ferromagnetic inlay 9, which is embedded within the tyre 1. The ferromagnetic inlay 9 has an outer surface 10 which is exposed from the material of the tyre 1 and which forms part of the rolling surface 4 of the tyre 1. The ferromagnetic inlay 9 may have an elongate shape, for example be cylindrical or rod shaped and have a longitudinal axis, I, which is positioned substantially perpendicularly to the rolling surface 4. The ferromagnetic inlay 9 may include ferromagnetic particles embedded in a rubber matrix (not illustrated in figure 1). In some embodiments, the ferromagnetic material is replaced by ferrimagnetic material.

The system 8 further includes a first coil 11 and a second coil 12, an inductance measuring circuit 15, means 16 for calculating a ratio of the measured first and second inductance L1 and L2 of the first and second coil 11, 12 and a transmitter 17. These further parts of the system 8 for monitoring the tread depth can be positioned outside of material of the tyre 1.

In the system 8 illustrated n figure 1, the first and second coils 11, 12 are arranged on an inner surface 13 of the tyre 1. In this embodiment, the first and second coils 11, 12 are planar coils and arranged in a stack symmetrically about the longitudinal axis of the ferromagnetic inlay 9. The first core 11 has a first initial inductance $L1_0$ and the second core 12 has a second initial inductance $L2_0$ which may be different from the first initial inductance $L1_0$. In some embodiments, such as that illustrated in figure 1, the first coil 11 has a larger number of turns than the second coil 12, a greater length and a larger outer diameter and consequently a larger initial inductance than the second coil 12.

The first and second inductance of the first and second coils 11, 12 depends on the geometry of the coil but also on the length or height of the ferromagnetic inlay 9 and on the magnetic permeability of the ferromagnetic material of the ferromagnetic inlay 9. As the tyre wears, material is removed from the rolling surface 4 of the tyre 1 and from the outer surface 10 of the ferromagnetic inlay 9. Therefore, as the depth D of the grooves 7 is reduced due to tyre wear, the outer surface 10 of the ferromagnetic inlay 9 is also successively removed due to abrasive wear and the height or length of the ferromagnetic inlay 9 is reduced in a similar way to the tread depth of the tyre 1. This reduction in the height of the ferromagnetic inlay 9 results in a change in the measured value L1, L2 of the first and second inductance of the first and second coils 11, 12, respectively, which is measured by the inductance measuring circuit 15. The inductance measuring circuit 15 may be an inductance to digital module, for example.

The first and second coils 11, 12 may be arranged within an electronic module which is indicated schematically in figure 1 with reference number 14, which is arranged on the inner surface 13 of the tyre 1. The electronic module 14 may include the inductance measuring circuit 15 for measuring the first inductance of the first coil 11 and the second inductance of the second coil 12, for example an inductance to digital device for inductivity sensing. The electronic module 14 may also include means 16 for calculating the ratio of the measured first and second inductance of the first coil 11 and the second coil 12. The means 16 may be provided by one or more processors.

The first and second coils 11, 12 are used to measure tread depth wirelessly without requiring a resistive connection between the first and second coils 11, 12 and the ferromagnetic inlay 9 and without requiring that the first and second coils 11, 12 are embedded within the pneumatic tyre 1. This simplifies manufacture of the system for measuring tread depth and also avoids any issues which can arise if more sensitive elements, such as the first and second coils 11, 12, and devices including active circuits such as transponders, are embedded in the tyre and subject to stress resulting from the operation and use of the tyre 1.

The magnetic permeability of the ferromagnetic material of the ferromagnetic inlay 9 is typically dependent on the temperature of the ferromagnetic inlay 9 and, consequently, of the temperature of the pneumatic tyre 1 in which it is embedded. Since the pneumatic tyre 1 warms up during use due to the friction between the rolling surface 4 and the road surface, the measured inductance L1, L2 of the first coil 11 and second coil 12 also depends on the temperature. Since two coils 11, 12 are used for a single common ferromagnetic inlay 9, both of the coils 11, 12 are affected to the same degree by abrasion or wear of the common ferromagnetic inlay 9 and by the temperature dependence of the magnetic permeability of the ferromagnetic inlay 9. However, the ratio of the first inductance to the second inductance L1/L2 is temperature independent. Therefore, the effect of temperature dependence of the magnetic permeability is removed by calculating the ratio of the inductances L1 and L2 of the two coils 11, 12 and a system 8 for measuring the tread depth D of the tyre that has temperature compensation is provided.

The ratio of the measured values L1 and L2 of the first and second coils 11, 12 calculated by the means 16 provides temperature compensation for the tread depth measurement which is based on the following principles:
The method which is carried out by the processor executable instructions is based on the following:

the first coil of the system creates a magnetic field, and its corresponding magnetic flux density is:

$$B1=\mu(T)\cdot f1(x,y,z),$$

and

the second coil of the system creates a magnetic field, and its corresponding magnetic flux density is:

$$B2=\mu(T)\cdot f2(x,y,z);$$

where $f1(x,y,z)$, $f2(x,y,z)$ are functions depending on the geometries including the ferromagnetic inlay, and $\mu(T)$ is the permeability of the ferromagnetic inlay that depends on temperature T.

The x,y,z geometric axes can be taken such that x,y describe the plane of the coils and the z axis is the longitudinal axis of the core. If the coils have radial symmetry about the z axis of the core and abrasion only impacts the z axis, then the inductances of the two coils depend on the abrasion on z direction and can be written as

for the first coil:

$$L1=\mu(T)\cdot F1(z),$$

for the second coil:

$$L2=\mu(T)\cdot F2(z),$$

where F1, F2 are functions depending only on geometry. Since the core is common, the permeability factor is the same and by taking their ratio, it vanishes:

$$L1/L2 = [\ \mu(T)\cdot F1(z)\ ]/[\ \mu(T)\cdot F2(z)\ ] = F1(z)\ /\ F2(z)$$

so that the ratio of the two inductances only depends on geometry of the ferromagnetic inlay and, therefore, a reduction in length of the ferromagnetic inlay along the z axis caused by abrasion. Therefore, a tread depth sensor having a compensated temperature dependence can be provided.

In some embodiments, the tread depth function sensor F(z) = F1(z) / F2(z) can be designed/optimized by simulation and validated / fine tuned by measurements made on prototypes.
The first coil 11 creates a magnetic field and its corresponding magnetic flux density is

$$B1=\mu(T)\cdot f1(x,y,z),$$

and
The second coil 12 creates a magnetic field and its corresponding magnetic flue density is

$$B2=\mu(T)\cdot f2(x,y,z)$$

where $f1(x,y,z)$, $f2(x,y,z)$ are functions depending on the geometries including the ferromagnetic inlay 9 and $\mu(T)$ is the permeability of the ferromagnetic inlay 9 depending on temperature T.
The x,y,z geometric axes can be taken such that x,y describe the plane of the coils 11, 12 and the z axis be the longitudinal axis of the ferromagnetic inlay 9. If the coils 11, 12 have radial symmetry about the z axis of the ferromagnetic inlay 9 and abrasion of the outer surface 10 only impacts the z axis, then the inductances of the two coils 11, 12 , depending on abrasion on z, are $L1=\mu(T)\cdot F1(z)$, $L2=\mu(T)\cdot F2(z)$, where F1, F2 are functions depending only on geometry. Since the ferromagnetic inlay 9 is common to both coils 11, 12 , the permeability factor is the same and by taking their ratio, it vanishes:

$$L1/L2 = [\ \mu(T)\cdot F1(z)\ ]/[\ \mu(T)\cdot F2(z)\ ] = F1(z)\ /\ F2(z).$$

so that the ratio of the two inductances only depends on geometry/abrasion of the ferromagnetic inlay 9. Therefore, by measuring the first and second inductance of the two coils 11, 12 and calculating the ration of the measured first and second inductance the system 8 for measuring a tread depth is provided with temperature compensation.

In some embodiments, the means 16 also determines whether there has been a change in the tread depth D and determine whether the tread depth has been reduced to or below a threshold level. If the means 16 determines that the tread depth has been reduced to or below a threshold level, a signal can be transmitted by the transmitter 17 to alert the driver or maintenance facility that the tread depth D is reduced and the pneumatic tyre 1 should be replaced. The electronic module 14 may also be part of a further tyre monitoring system, for example a tyre pressure monitoring system (TPMS), or tyre temperature monitoring system.

The system 8 may be provided as a kit of parts which includes the ferromagnetic inlay 9 in a freestanding form. The ferromagnetic inlay 9 may then be embedded in the tyre 1 and the coils 11, 12 arranged on the inner surface 13 of the tyre 1 to assemble the kit. The coils 11,12 may be positioned within the electronic module 14, as illustrated in figure 1, and the electronic module 14 positioned on the inner surface 13 of the tyre 1. Some parts of the kit may, however, be positioned separately from the tyre 1. For example, the coils 11, 12, the inductance measuring circuit 15 and the transmitter 17 may be arranged on the inner surface 13 of the tyre 1 and the means 16 to determine the ratio of the first and second inductances may be positioned in a further unit that is separate from the tyre 1. The further unit may be positioned elsewhere on the vehicle, for example.

**Claims**

1.    A system (8) for measuring tread depth of a pneumatic tyre (1), the system (8) comprising:

> a sensor element comprising a magnetic inlay (9) that is sized and shaped to be embedded in the tyre (1) and to have an outer surface (10) that is part of a rolling surface (4) of the tyre (1);
> a first coil (11) having a first inductance;
> a second coil (12) having a second inductance, wherein the first inductance is different from the second inductance and the first inductance and the second inductance are dependent at least in part on the size of the magnetic inlay (9);
> an inductance measuring circuit (15) for measuring the first inductance of the first coil (11) and the second inductance of the second coil (12), wherein wear of the magnetic inlay (9) causes a change in the value of the measured first inductance and/or measured second inductance, the change being indicative of wear of the tread depth of the tyre (1);
> means (16) for calculating a ratio of the measured first inductance and the measured second inductance;
> a transmitter (17) for transmitting one or more output values representative of the measured first inductance and/or the measured second inductance and/or the ratio of the measured first inductance and the measured second inductance.

2.    A system (8) according to claim 1, wherein the inductance measuring circuit (15), the means for calculating a ratio of the first and the second inductance (16) and the transmitter (17) are arranged within an electronic module (14) having a housing, wherein the first coil (11) and the second coil (12) are arranged within the electronic module (14) or on an outer surface of the housing.

3.    A system (8) according to claim 1 or claim 2, wherein the first coil (11) is a planar coil and the second coil (12) is a planar coil, and wherein the first coil (12) and the second coil (12) are arranged in a stack symmetrically about an axis that extends perpendicularly to the plane of the first planar coil (11) and the second planar coil (12).

4.    A system (8) according to claim 3, wherein the magnetic inlay (9) has a longitudinal axis, and the axis of the stack is alignable with the longitudinal axis of the magnetic inlay (9) so that the first planar coil (11) and the second planar coil (12) are arranged symmetrically about the longitudinal axis of the magnetic inlay (9).

5.    A system according to one of claims 1 to 4, wherein the inductance measuring circuit (15) is an inductance to digital converter module.

6. A system (8) according to one of claims 1 to 5, wherein the magnetic inlay (9) comprises ferromagnetic particles embedded in a rubber matrix, or a ferrimagnetic material.

7. A system (8) according to one of claims 1 to 6, wherein the magnetic inlay (9) comprises a ferromagnetic material having a temperature dependent magnetic permeability, wherein a ratio of the measured first inductance and the measured second inductance is independent of the temperature dependence of the magnetic permeability.

8. A system (8) according to one of claims 1 to 7, the system further comprising a pneumatic tyre (1) having a tread depth; wherein the magnetic inlay (9) is embedded in the tyre (1) such that the outer surface (10) of the magnetic inlay (9) forms part of a rolling surface (4) of the tyre (1).

9. A system according to claim 8, wherein the first coil (11) and the second coil (12) are arranged on an inner surface (13) of the tyre (1).

10. A system according to claim 8 or claim 9, wherein the electronic module (14) is arranged on the inner surface (13) of the tyre (1).

11. A system according to one of claims 8 to 10, wherein the magnetic inlay (9) has a longitudinal axis, the first coil (11) is a planar coil and the second coil (12) is a planar coil and the first coil (12) and the second coil (12) are arranged in a stack symmetrically about an axis that extends perpendicularly to the plane of the first planar coil (11) and the second planar coil (12), wherein the axis of the stack is aligned with the longitudinal axis of the magnetic inlay (9) so that the first planar coil and the second planar coil are arranged symmetrically about the longitudinal axis of the magnetic inlay (9).

12. A method of measuring a tread depth of a pneumatic vehicle tyre (1), wherein the pneumatic tyre (1) comprises a sensor element comprising magnetic inlay (9) that is embedded in the tyre (1) and has an outer surface (10) that is part of a rolling surface (4) of the tyre (1), wherein a first coil (11) having a first inductance and a second coil (12) having a second inductance are arranged on an inner surface (13) of the tyre (1), wherein the first inductance is different from the second inductance and the first inductance and the second inductance are dependent at least in part on the size of magnetic inlay (9) embedded in the tyre (1),
the method comprising:

measuring a value of the first inductance of the first coil (11) and a value of the second inductance of a second coil (12);
determining a change in the measured value of the first inductance and/or the second inductance, the change arising at least in part from wear of the magnetic inlay (9) and being indicative of wear of the tread depth of the tyre (1);
generating an output signal in response to the determination that there is a change in measured value of the first inductance and/or the second inductance, and
transmitting the output signal.

13. The method of claim 12, wherein

the magnetic inlay (9) comprises a longitudinal axis that is substantially perpendicular to the rolling surface (4), the first coil (11) is a planar coil and the second coil (12) is a planar coil, wherein the first coil (11) and the second coil (12) are arranged in a stack symmetrically about the longitudinal axis of the magnetic inlay (9),
wherein the magnetic inlay (9) comprises a ferromagnetic material having a temperature dependent magnetic permeability and a ratio of the first inductance and the second inductance is independent of the temperature dependence of the magnetic permeability,
wherein the method further comprises:
determining a ratio of the measured first inductance and the measured second inductance.

14. The method of claim 13, further comprising:
determining a change in the value of the ratio of the measured first inductance and the measured second inductance compared to a ratio of an initial first inductance of the first planar coil and an initial second inductance of the second planar coil, the change being caused by a reduction in the height of the magnetic inlay (9) along the longitudinal axis, the reduction in the height being caused at least in part by wear of the magnetic inlay (9) and being indicative of a reduction in the tyre tread depth.

15. The method of claim 13 or claim 14, further comprising:

determining if the ratio is indicative of a reduction in the tread depth below a predetermined threshold value, and in response to determining that the ratio is indicative of a reduction in the tread depth below a predetermined threshold value, outputting a warning signal.

**Patentansprüche**

1. System (8) zum Messen der Profiltiefe eines Luftreifens (1), wobei das System (8) Folgendes umfasst:

ein Sensorelement, das eine magnetische Einlage (9) aufweist, die so bemessen und geformt ist, dass sie in den Reifen (1) eingebettet werden kann, und eine äußere Oberfläche (10) besitzt, die einen Teil der Lauffläche (4) des Reifens (1) bildet;
eine erste Spule (11), die eine erste Induktivität besitzt;
eine zweite Spule (12), die eine zweite Induktivität besitzt, wobei die erste Induktivität von der zweiten Induktivität verschieden ist und die erste Induktivität und die zweite Induktivität wenigstens teilweise von der Größe der magnetischen Einlage (9) abhängen;
eine Induktivitätsmessschaltung (15) zum Messen der ersten Induktivität der ersten Spule (11) und der zweiten Induktivität der zweiten Spule (12), wobei ein Verschleiß der magnetischen Einlage (9) eine Änderung der Werte der gemessenen ersten Induktivität und/oder der gemessenen zweiten Induktivität hervorruft, wobei die Änderung einen Verschleiß der Profiltiefe des Reifens (1) angibt;
Mittel (16) zum Berechnen eines Verhältnisses der gemessenen ersten Induktivität zu der gemessenen zweiten Induktivität;
einen Sender (17) zum Senden eines oder mehrerer Ausgangswerte, die die gemessene erste Induktivität und/oder die gemessene zweite Induktivität und/oder das Verhältnis der gemessenen ersten Induktivität zu der gemessenen zweiten Induktivität angeben.

2. System (8) nach Anspruch ab, wobei die Induktivitätsmessschaltung (15), die Mittel (16) zum Berechnen eines Verhältnisses der ersten zu der zweiten Induktivität und der Sender (17) in einem elektronischen Modul (14), das ein Gehäuse besitzt, angeordnet sind, wobei die erste Spule (11) und die zweite Spule (12 in dem elektronischen Modul (14) oder auf einer äußeren Oberfläche des Gehäuses angeordnet sind.

3. System (8) nach Anspruch 1 oder Anspruch 2, wobei die erste Spule (11) eine ebene Spule ist und die zweite Spule (12) eine ebene Spule ist und wobei die erste Spule (12) und die zweite Spule (12) in einem Stapel angeordnet sind, der um eine Achse, die sich senkrecht zu der Ebene der ersten ebenen Spule (11) und der zweiten ebenen Spule (12) erstreckt, symmetrisch ist.

4. System (8) nach Anspruch 3, wobei die magnetische Einlage (9) eine Längsachse besitzt und die Achse des Stapels auf die Längsachse der magnetischen Einlage (9) ausgerichtet werden kann, so dass die erste ebene Spule (11) und die zweite ebene Spule (12) symmetrisch um die Längsachse der magnetischen Einlage (9) angeordnet sind.

5. System nach einem der Ansprüche 1 bis 4, wobei die Induktivitätsmessschaltung (15) ein Induktivität/Digital-Umsetzermodul ist.

6. System (8) nach einem der Ansprüche 1 bis 5, wobei die magnetische Einlage (9) ferromagnetische Artikel, die in einen Gummigrundstoff eingebettet sind, oder ein ferrimagnetisches Material enthält.

7. System (8) nach einem der Ansprüche 1 bis 6, wobei die magnetische Einlage (9) ein ferromagnetisches Material enthält, das eine temperaturabhängige magnetische Permeabilität besitzt, wobei ein Verhältnis der gemessenen ersten Induktivität zu der gemessenen zweiten Induktivität von der Temperaturabhängigkeit der magnetischen Permeabilität unabhängig ist.

8. System (8) nach einem der Ansprüche 1 bis 7, wobei das System ferner einen Luftreifen (1) mit einer Profiltiefe umfasst;

wobei die magnetische Einlage (9) in den Reifen (1) in der Weise eingebettet ist, dass die äußere Oberfläche (10) der magnetischen Einlage (9) einen Teil einer Lauffläche (4) des Reifens (1) bildet.

9. System nach Anspruch 8, wobei die erste Spule (11) und die zweite Spule (12) auf einer inneren Oberfläche (13) des Reifens (1) angeordnet sind.

10. System nach Anspruch 8 oder Anspruch 9, wobei das elektronische Modul (14) auf der inneren Oberfläche (13) des Reifens (1) angeordnet ist.

11. System nach einem der Ansprüche 8 bis 10, wobei die magnetische Einlage (9) eine Längsachse besitzt, die erste Spule (11) eine ebene Spule ist und die zweite Spule (12) eine ebene Spule ist und die erste Spule (12) und die zweite Spule (12) in einem Stapel angeordnet sind, der um eine Achse, die sich senkrecht zu der Ebene der ersten ebenen Spule (11) und der zweiten ebenen Spule (12) erstreckt, symmetrisch ist, wobei die Achse des Stapels auf die Längsachse der magnetischen Einlage (9) ausgerichtet ist, so dass die erste ebene Spule und die zweite ebene Spule symmetrisch um die Längsachse magnetischen Einlage (9) angeordnet sind.

12. Verfahren zum Messen einer Profiltiefe eines Fahrzeug-Luftreifens (1), wobei der Luftreifen (1) ein Sensorelement umfasst, das eine magnetische Einlage (9) aufweist, die in den Reifen (1) eingebettet ist und eine äußere Oberfläche (10) besitzt, die einen Teil einer Lauffläche (4) des Reifens (1) bildet, wobei eine erste Spule (11), die eine erste Induktivität hat, und eine zweite Spule (12), die eine zweite Induktivität hat, auf einer inneren Oberfläche (Sinn) des Reifens (1) angeordnet sind, wobei die erste Induktivität von der zweiten Induktivität verschieden ist und die erste Induktivität und die zweite Induktivität wenigstens teilweise von der Größe der in den Reifen (1) eingebetteten magnetischen Einlage (9) abhängen,
wobei das Verfahren Folgendes umfasst:

Messen eines Wertes der ersten Induktivität der ersten Spule (11) und eines Wertes der zweiten Induktivität der zweiten Spule (12);
Bestimmen einer Änderung der gemessenen Werte der ersten Induktivität und/oder der zweiten Induktivität, wobei die Änderung wenigstens teilweise aufgrund von Verschleiß der magnetischen Einlage (9) entsteht und einen Verschleiß der Profiltiefe des Reifens (1) angibt;
Erzeugen eines Ausgangssignals in Reaktion auf das Bestimmen, dass in den gemessenen Werten der ersten Induktivität und/oder der zweiten Induktivität eine Änderung vorliegt, und
Senden des Ausgangssignals.

13. Verfahren Anspruch 12, wobei

die magnetische Einlage (9) eine Längsachse besitzt, die zu der Lauffläche (4) im Wesentlichen senkrecht ist, die erste Spule (11) eine ebene Spule ist und die zweite Spule (12) eine ebene Spule ist, wobei die erste Spule (11) und die zweite Spule (12) in einem Stapel angeordnet sind, der um die Längsachse der magnetischen Einlage (9) symmetrisch ist,
wobei die magnetische Einlage (9) ein ferromagnetisches Material enthält, dass eine temperaturabhängige magnetische Permeabilität besitzt, wobei ein Verhältnis der ersten Induktivität zu der zweiten Induktivität von der Temperaturabhängigkeit der magnetischen Permeabilität unabhängig ist,
wobei das Verfahren ferner Folgendes umfasst:
Bestimmen eines Verhältnisses der gemessenen ersten Induktivität zu der gemessenen zweiten Induktivität.

14. Verfahren nach Anspruch 13, das ferner Folgendes umfasst:
Bestimmen einer Änderung des Wertes des Verhältnisses der gemessenen ersten Induktivität zu der gemessenen zweiten Induktivität im Vergleich zu einem Verhältnis einer anfänglichen ersten Induktivität der ersten ebenen Spule zu einer anfänglichen zweiten Induktivität der zweiten ebenen Spule, wobei die Änderung durch eine Abnahme der Höhe der magnetischen Einlage (9) entlang der Längsachse hervorgerufen wird, wobei die Abnahme der Höhe wenigstens teilweise durch Verschleiß der magnetischen Einlage (9) hervorgerufen wird und eine Abnahme der Reifenprofiltiefe angibt.

15. Verfahren nach Anspruch 13 oder Anspruch 14, das ferner Folgendes umfasst:

Bestimmen, ob das Verhältnis eine Abnahme der Profiltiefe unter einen vorgegebenen Schwellenwert angibt, und

Ausgeben eines Warnsignals in Reaktion auf das Bestimmen, dass das Verhältnis eine Abnahme der Profiltiefe unter einen vorgegebenen Schwellenwert angibt.

**Revendications**

1. Système (8) de mesure d'une profondeur de sculpture d'un pneumatique (1), le système (8) comprenant :

   un élément capteur comprenant une incrustation magnétique (9) qui est dimensionnée et profilée de manière à être noyée dans le pneumatique (1) et à présenter une surface extérieure (10) qui fait partie d'une surface de roulement (4) du pneumatique (1) ;
   une première bobine (11) présentant une première inductance ;
   une deuxième bobine (12) présentant une deuxième inductance, la première inductance étant différente de la deuxième inductance et la première inductance et la deuxième inductance dépendant au moins en partie de la dimension de l'incrustation magnétique (9) ;
   un circuit de mesure d'inductance (15) pour mesurer la première inductance de la première bobine (11) et la deuxième inductance de la deuxième bobine (12), l'usure de l'incrustation magnétique (9) provoquant une variation de la valeur de la première inductance mesurée et/ou de la deuxième inductance mesurée, la variation indiquant l'usure de la profondeur de sculpture du pneumatique (1) ;
   un moyen (16) de calcul d'un rapport entre la première inductance mesurée et la deuxième inductance mesurée ;
   un émetteur (17) pour émettre une ou plusieurs valeurs de sortie représentant la première inductance mesurée et/ou la deuxième inductance mesurée et/ou le rapport entre la première inductance mesurée et la deuxième inductance mesurée.

2. Système (8) selon la revendication 1, dans lequel le circuit de mesure d'inductance (15), le moyen de calcul d'un rapport entre la première et la deuxième inductance (16) et l'émetteur (17) sont agencés au sein d'un module électronique (14) pourvu d'un boîtier, la première bobine (11) et la deuxième bobine (12) étant agencées au sein du module électronique (14) ou sur une surface extérieure du boîtier.

3. Système (8) selon la revendication 1 ou la revendication 2, dans lequel la première bobine (11) est une bobine plane et la deuxième bobine (12) est une bobine plane, et dans lequel la première bobine (12) et la deuxième bobine (12) sont agencées en pile symétriquement par rapport à un axe qui s'étend perpendiculairement au plan de la première bobine plane (11) et de la deuxième bobine plane (12).

4. Système (8) selon la revendication 3, dans lequel l'incrustation magnétique (9) présente un axe longitudinal, et l'axe de la pile est susceptible d'être aligné avec l'axe longitudinal de l'incrustation magnétique (9) de sorte que la première bobine plane (11) et la deuxième bobine plane (12) sont agencées symétriquement par rapport à l'axe longitudinal de l'incrustation magnétique (9).

5. Système selon l'une des revendications 1 à 4, dans lequel le circuit de mesure d'inductance (15) est un module convertisseur inductance-numérique.

6. Système (8) selon l'une des revendications 1 à 5, dans lequel l'incrustation magnétique (9) comprend des particules ferromagnétiques noyées dans une matrice de caoutchouc, ou un matériau ferrimagnétique.

7. Système (8) selon l'une des revendications 1 à 6, dans lequel l'incrustation magnétique (9) comprend un matériau ferromagnétique présentant une perméabilité magnétique dépendant de la température, un rapport entre la première inductance mesurée et la deuxième inductance mesurée étant indépendant de la dépendance en température de la perméabilité magnétique.

8. Système (8) selon l'une des revendications 1 à 7, le système comprenant en outre un pneumatique (1) présentant une profondeur de sculpture ;
   dans lequel l'incrustation magnétique (9) est noyée dans le pneu (1) de sorte que la surface extérieure (10) de l'incrustation magnétique (9) fait partie d'une surface de roulement (4) du pneumatique (1).

9. Système selon la revendication 8, dans lequel la première bobine (11) et la deuxième bobine (12) sont agencées sur une surface intérieure (13) du pneumatique (1).

**10.** Système selon la revendication 8 ou la revendication 9, dans lequel le module électronique (14) est agencé sur la surface intérieure (13) du pneumatique (1).

**11.** Système selon l'une des revendications 8 à 10, dans lequel l'incrustation magnétique (9) présente un axe longitudinal, la première bobine (11) et une bobine plane et la deuxième bobine (12) est une bobine plane et la première bobine (12) et la deuxième bobine (12) sont agencées en pile symétriquement par rapport à un axe qui s'étend perpendiculairement au plan de la première bobine plane (11) et de la deuxième bobine plane (12), l'axe de la pile étant aligné avec l'axe longitudinal de l'incrustation magnétique (9) de sorte que la première bobine plane et la deuxième bobine plane sont agencées symétriquement par rapport à l'axe longitudinal de l'incrustation magnétique (9).

**12.** Procédé de mesure d'une profondeur de sculpture d'un pneumatique (1) de véhicule, le pneumatique (1) comprenant un élément capteur comprenant une incrustation magnétique (9) qui est noyée dans le pneumatique (1) et présente une surface extérieure (10) qui fait partie d'une surface de roulement (4) du pneumatique (1), une première bobine (11) présentant une première inductance et une deuxième bobine (12) présentant une deuxième inductance étant agencées sur une surface intérieure (13) du pneumatique (1), la première inductance étant différente de la deuxième inductance et la première inductance et la deuxième inductance dépendant au moins en partie de la dimension de l'incrustation magnétique (9) noyée dans le pneumatique (1),
le procédé comprenant :

la mesure d'une valeur de la première inductance de la première bobine (11) et d'une valeur de la deuxième inductance de la deuxième bobine (12) ;
la détermination d'une variation de la valeur mesurée de la première inductance et/ou de la deuxième inductance, la variation découlant au moins en partie de l'usure de l'incrustation magnétique (9) et indiquant l'usure de la profondeur de sculpture du pneumatique (1) ;
la génération d'un signal de sortie en réponse à la détermination de l'existence d'une variation de la valeur mesurée de la première inductance et/ou de la deuxième inductance, et
l'émission du signal de sortie.

**13.** Procédé selon la revendication 12, dans lequel

l'incrustation magnétique (9) comprend un axe longitudinal qui est sensiblement perpendiculaire à la surface de roulement (4),
la première bobine (11) est une bobine plane et la deuxième bobine (12) est une bobine plane, la première bobine (11) et la deuxième bobine (12) étant agencées en pile symétriquement par rapport à l'axe longitudinal de l'incrustation magnétique (9),
l'incrustation magnétique (9) comprenant un matériau ferromagnétique présentant une perméabilité magnétique dépendant de la température et un rapport entre la première inductance et la deuxième inductance étant indépendant de la dépendance en température de la perméabilité magnétique,
le procédé comprenant en outre :
la détermination d'un rapport entre la première inductance mesurée et la deuxième inductance mesurée.

**14.** Procédé selon la revendication 13, comprenant en outre :
la détermination d'une variation de la valeur du rapport entre la première inductance mesurée et la deuxième inductance mesurée par rapport à un rapport entre une première inductance initiale de la première bobine plane et une deuxième inductance initiale de la deuxième bobine plane, la variation étant due à une réduction de la hauteur de l'incrustation magnétique (9) suivant l'axe longitudinal, la réduction de la hauteur étant due au moins en partie à l'usure de l'incrustation magnétique (9) et indiquant une réduction de la profondeur de sculpture du pneumatique.

**15.** Procédé selon la revendication 13 ou la revendication 14, comprenant en outre :

la détermination si le rapport indique une réduction de la profondeur de sculpture sous une valeur-seuil prédéterminée, et
en réponse à la détermination que le rapport indique une réduction de la profondeur de sculpture sous une valeur-seuil prédéterminée, la délivrance d'un signal d'avertissement.

Fig. 1

**REFERENCES CITED IN THE DESCRIPTION**

**Patent documents cited in the description**

- WO 2015083072 A1